Europäisches Patentamt

European Patent Office

(11) Publication number: **0 047 074**
**B1**

Office européen des brevets

(12)

# EUROPEAN PATENT SPECIFICATION

(45) Date of publication of patent specification: **06.06.84**

(51) Int. Cl.³: **B 60 G 11/10,**
**B 60 G 11/04, F 16 F 1/18**

(21) Application number: **81303636.5**

(22) Date of filing: **10.08.81**

(54) Composite springs.

(30) Priority: **30.08.80 GB 8028102**

(43) Date of publication of application:
**10.03.82 Bulletin 82/10**

(45) Publication of the grant of the patent:
**06.06.84 Bulletin 84/23**

(84) Designated Contracting States:
**AT BE CH DE FR GB IT LI LU NL SE**

(56) References cited:
**EP - A - 0 005 916**
**DE - A - 2 635 329**
**FR - A - 2 102 454**
**US - A - 2 643 111**
**US - A - 3 305 231**
**US - A - 3 437 333**
**US - A - 3 490 758**

(73) Proprietor: **GKN Group Services Limited**
**Group Head Office P.O. Box 55**
**Smethwick Warley West Midlands B66 2RZ (GB)**

(72) Inventor: **Dimmock, John**
**105 The Lindens**
**Newbridge Crescent Wolverhampton WV6 0LS**
**(GB)**
Inventor: **Harris, Leighton Richard.**
**43 Lawrence Weston Road**
**Bristol (GB)**

(74) Representative: **Dodd, Graham Marshall et al,**
**Guest Keen & Nettlefolds Ltd. Group Patents and**
**Licensing Department Group Head Office P.O. Box**
**55**
**Smethwick Warley West Midlands B66 2RZ (GB)**

Courier Press, Leamington Spa, England.

## Description

This invention relates to leaf springs made of ·fibre reinforced composite material, comprising layers of fibres at least the majority of which extend longitudinally of the spring spaced from one another in the direction of bending of the spring by a core portion of randomly oriented fibres, all the fibres being set in a resin material. Such leaf springs will hereinafter be referred to as leaf springs of the kind specified.

More particularly, the invention relates to the securing to a spring of the kind specified, in the central region thereof, of a component such as a vehicle axle. The properties of such a spring depend, inter alia on the longitudinally extending fibres thereof not being interrupted by whatever expedient is used to attach the component to the spring.

According to the present invention, we provide an assembly comprising a leaf spring of the kind specified, a component secured thereto by clamping means at least partially embracing the spring, and a locating member engaging with a formation extending at least partially ·through the core portion of the spring, said locating member also engaging the component and/or clamping means to prevent movement of the component longitudinally of the spring.

It has been found that the properties of a spring of the kind specified are not adversely effected by the provision of a bore or other formation extending transversely through the core portion of the spring, since the longitudinally extending fibres remain unaffected thereby. The use of such a formation to provide for location of the component which is secured to the spring by the clamp means thus is an improvement upon any construction utilising bolts or the like penetrating the spring in its primary direction of bending.

The locating member may comprise a plate extending across the width of the spring and having upstanding lugs which lie against the sides of the spring, a bolt passing through said lugs and the core portion of the spring. The plate may have a formation which engages the component to be attached to the spring.

The clamping means may comprise U-bolts. An alternative form of locating member, in the form of a plate, provided at each side of the spring, may fit between the U-bolts.

These and other features of the invention will now be described by way of example with reference to the accompanying· drawings, of which

Figure 1 is a side elevation of one form of assembly according to the invention.

Figure 2 is a perspective view of part of a further embodiment of the invention.

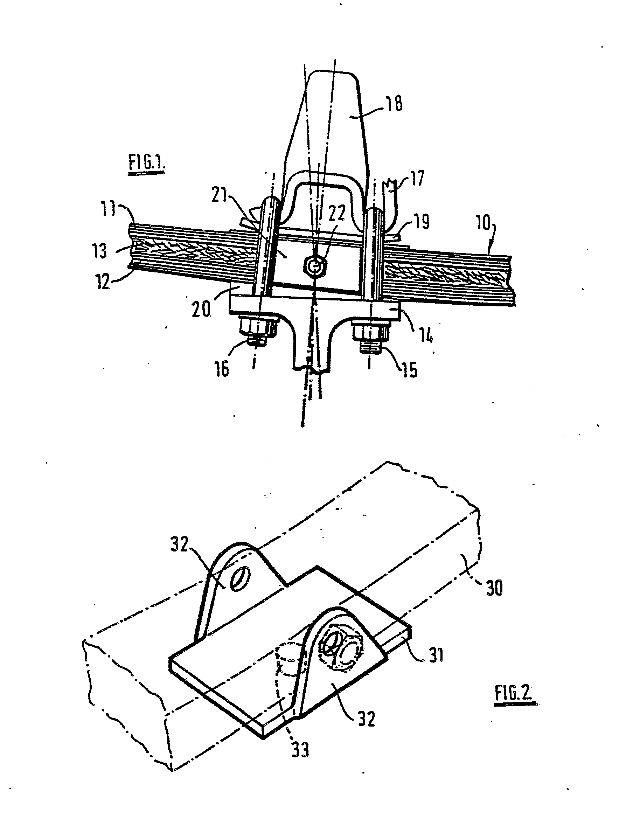

Referring firstly to Figure 1, the assembly there illustrated comprises a leaf spring 10 which has spaced layers 11, 12 of fibres the majority of which extend longitudinally of the spring and a core portion 13 of randomly oriented fibres. All the fibres are set in a matrix of a cured resin material, e.g. an epoxy resin, and in one construction of such a spring proposed hitherto the fibres which are longitudinally oriented may be wholly or partly carbon fibres while the fibres in the core portion are glass fibres.

An axle beam 14 is secured to the spring by U shape clamping bolts 15, 16 which embrace the spring. On the upper surface of the spring these bolts clamp to the spring a sheet metal component 17 which carries a bump stop 18, and a spacer 19. Between the axle beam 14 and the lower surface of the spring 10 is interposed a wedge shaped element 20 which provides for a desired orientation of the axle beam relative to the spring.

If the axle beam were to be required to lie against the spring, the wedge-shaped element 20 would be omitted.

To each side of the spring 10 is secured a locating plate 21, by a bolt 22 extending transversely through an aperture in the core portion 13 of the spring. The plates 21 are a close fit between the U bolts 15, 16, and thus prevent undesired movement of the axle beam longitudinally of the spring.

Referring now to Figure 2, there is illustrated in outline only a spring 30. A locating member is provided in the form of a plate 31 with upwardly extending lugs 32 which lie against the sides of the spring. A bolt, not shown, is passed through the lugs 32 and the core portion of the spring to secure the locating member to the spring. An axle beam is clamped to the spring by U shaped bolts as in Figure 1 or any suitable alternative clamping means, and a dowel peg 33 on the underside of the locating member engages the axle beam to prevent movement of the latter longitudinally of the spring. In this case, the clamping means takes no part in longitudinal location of the axle beam relative to the spring.

If the spring is of a rectangular shape in cross section, having sharp corners, spacing washers may be disposed between the lugs 32 and the sides of the spring. This is because a plate 31, which normally will be made by bending sheet metal, cannot be formed with a sharp right angled section in the internal angle between the lugs 32 and flat part of the plate 31. If the corners of the spring, as viewed in cross section, are rounded, both the plate 31 and lugs 32 may lie closely against the spring.

In this embodiment also there may be provided one or more spacers between the actual beam and the spring, or, if required, a wedge shaped element as shown in Figure 1.

Although the particular embodiment described above is the securing of an axle beam to a spring, it will be appreciated that the invention is applicable to the securing of other components to a spring where similar or analogous conditions apply.

## Claims

1. An assembly comprising a leaf spring (10) made of layers of fibres (11, 12) at least the majority of which extend longitudinally of the spring, spaced from one another from the direction of bending of the spring by a core portion (13) of randomly oriented fibres, all the fibres being set in a resin material, and a component (14) secured to the spring by clamping means (15, 16) at least partially embracing the spring, characterised by a locating member (21, 22, 31) engaging with a formation extending at least partially through the core portion (13) of the spring and also engaging the clamping means (15, 16) and/or component (14) to prevent movement of the component longitudinally of the spring.

2. An assembly according to Claim 1 further characterised in that the locating member comprises a plate (31) extending across the width of the spring and having lugs (32) which lie against the sides of the spring, a fastener passing laterally through said lugs and an aperture through the core portion of the spring.

3. An assembly according to Claim 2 further characterised in that said plate has a formation (33) which engages the component to be attached to the spring.

4. An assembly according to any one of the preceding claims further characterised in that said clamping means comprises U shaped bolts (15, 16).

5. An assembly according to Claim 4 further characterised in that a locating member (21) is provided at each side of the spring, and fits between said U shaped bolts.

6. An assembly according to any one of the preceding claims further characterised in that said component (14) is an axle beam.

## Revendications

1. Assemblage comprenant un ressort à lame (10) constitué de couches de fibres (11, 12) dont la majorité au moins s'étend dans le sens de la longueur du ressort, et qui sont espacées l'une de l'autre, dans le sens de la flexion du ressort par une âme (13) en fibres orientées de façon aléatoire, toutes les fibres étant emprisonnées dans une matière à base de résine, et un constituant (14) fixé au ressort par des moyens de blocage (15, 16) entourant au moins partiellement le ressort, caractérisé par un organe de positionnement (21, 22, 31) en prise avec une conformation qui s'étend au moins partiellement dans l'âme (13) du ressort, et en prise aussi avec les moyens de blocage (15, 16) et/ou avec le constituant (14), pour empêcher le constituant de se déplacer dans le sens de la longueur du ressort.

2. Assemblage conforme à la revendication 1, caractérisé, en outre, en ce que l'organe de positionnement comprend une plaque (31) qui s'étend sur toute la largeur du ressort et qui a des pattes (32) reposant contre les côtés du ressort, tandis qu'un moyen d'attache traverse latéralement lesdites pattes et une ouverture à travers l'âme du ressort.

3. Assemblage conforme à la revendication 2, caractérisé, en outre, en ce que ladite plaque a une conformation (33) qui est en prise avec le constituant à attacher au ressort.

4. Assemblage conforme à l'une quelconque des revendications précédentes, caractérisé, en outre, en ce que le moyen de blocage comprend des boulons en forme de U (15, 16).

5. Assemblage conforme à la revendication 4, caractérisé, en outre, en ce qu'un organe de positionnement (21) est aménagé de chaque côté du ressort, et est ajusté entre lesdits boulons en forme de U.

6. Assemblage conforme à l'une quelconque des revendications précédentes, caractérisé, en outre, en ce que le constituant (14) est une poutre d'essieu.

## Patentansprüche

1. Anordnung bestehend aus einer Blattfeder (10), die aus Faserlagen (11, 12) hergestellt ist, von denen sich wenigstens die Mehrheit in Längsrichtung der Feder erstreckt und die in der Biegerichtung der Feder durch einen aus willkürlich orientierten Fasern sich zusammensetzenden Kernabschnitt (13) in einem Abstand voneinander gehalten werden, wobei alle Fasern in einem Harzwerkstoff eingebettet sind, und einem an der Feder mittels einer, diese wenigstens teilweise umfassende Klemmvorrichtung (15, 16) befestigten Bauteil (14), dadurch gekennzeichnet, daß ein Haltekörper (21, 22, 31) vorgesehen ist, der in eine wenigstens teilweise durch den Kernabschnitt (13) der Feder sich erstreckende Formation und ebenso in die Klemmvorrichtung (15, 16) und/oder das Bauteil (14) eingreift, um eine Bewegung des Bauteils in Längsrichtung der Feder zu verhindern.

2. Anordnung nach Anspruch 1, dadurch gekennzeichnet, daß der Haltekörper aus einer über die Breite der Feder sich erstreckende Platte (31) besteht und an den Seiten der Feder anliegende Ansätze (32) aufweist, wobei ein Verbindungselement seitlich durch die Ansätze und durch eine Öffnung in dem Kernabschnitt der Feder greift.

3. Anordnung nach Anspruch 2, dadurch gekennzeichnet, daß die genannte Platte eine Formation (33) aufweist, die in das an der Feder zu befestigende Bauteil eingreift.

4. Anordnung nach einem der vorhergehenden Ansprüche, dadurch gekennzeichnet, daß die Klemmvorrichtung aus U-förmigen Schrauben (15, 16) besteht.

5. Anordnung nach Anspruch 4, dadurch gekennzeichnet, daß auf jeder Seite der Feder ein Haltekörper (21) vorgesehen wird, der zwischen die U-förmigen Schrauben paßt.

6. Anordnung nach einem der vorhergehenden Ansprüche, dadurch gekennzeichnet, daß das genannte Bauteil (14) ein Achskörper ist.

FIG.1.

FIG.2.

1